(19) Europäisches Patentamt
European Patent Office
Office européen des brevets

(11) EP 1 062 153 B1

(12) **FASCICULE DE BREVET EUROPEEN**

(45) Date de publication et mention de la délivrance du brevet:
**23.10.2002 Bulletin 2002/43**

(21) Numéro de dépôt: **99907677.1**

(22) Date de dépôt: **10.03.1999**

(51) Int Cl.7: **B64B 1/00**, B64C 39/00

(86) Numéro de dépôt international:
**PCT/FR99/00533**

(87) Numéro de publication internationale:
**WO 99/046165 (16.09.1999 Gazette 1999/37)**

# (54) AEROSTAT LIBRE A ROTATION PERMANENTE MOBILE EN TRANSLATION RADIALE PAR RAPPORT A L'AIR ATMOSPHERIQUE

PERMANENT DREHENDER LUFTBALLON MIT EINER RELATIV ZUR ATMOSPHERISCHEN LUFT RADIALEN, LINEAREN BEWEGUNG

PERMANENTLY ROTATING FREE AEROSTAT MOBILE IN RADIAL TRANSLATION RELATIVE TO AMBIENT AIR

(84) Etats contractants désignés:
**DE ES FR GB IT**

(30) Priorité: **11.03.1998 FR 9802959**

(43) Date de publication de la demande:
**27.12.2000 Bulletin 2000/52**

(73) Titulaire: **CENTRE NATIONAL D'ETUDES SPATIALES**
**F-75039 Paris Cedex 01 (FR)**

(72) Inventeurs:
- **LAFUMA, Pierre**
  **F-31400 Toulouse (FR)**
- **VARGAS, André**
  **F-31400 Toulouse (FR)**
- **EVRARD, Jean, François, Joseph**
  **F-31520 Ramonville (FR)**
- **MERCIER, Flavien, Michel, François**
  **F-31320 Auzeville (FR)**

(74) Mandataire:
**Cabinet BARRE LAFORGUE & associés**
**95, rue des Amidonniers**
**31000 Toulouse (FR)**

(56) Documents cités:
**WO-A-97/33790**
**FR-A- 1 107 257**
**FR-A- 2 366 989**
**GB-A- 2 082 995**
**US-A- 4 433 819**
**US-A- 4 807 830**
**US-A- 5 351 911**
**US-A- 5 678 783**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne un aérostat libre plus léger que l'air du type comprenant au moins une chambre principale fermée étanche à volume constant pressurisée par un gaz plus léger que l'air de façon à permettre l'ascension et le vol de l'aérostat. Dans toute la présente demande, on désigne par "aérostat", tout véhicule plus léger que l'air, et on entend par «géostationnaire» le fait qu'un aérostat reste au moins sensiblement à la verticale d'un point fixe par rapport au sol.

Les aérostats, dits libres, sont ceux qui ne sont pas reliés mécaniquement au sol, à l'inverse des aérostats captifs. Les ballons libres traditionnels présentent l'inconvénient de dériver, notamment horizontalement, par rapport au sol au gré des vents, sans possibilité de maîtrise de leur position ou de leur trajectoire. Les ballons captifs ne présentent pas cet inconvénient, et sont au moins sensiblement géostationnaires. Néanmoins, ils nécessitent au moins un câble de liaison avec le sol, lourd, triangulé, qui est une source de danger pour la circulation aérienne, et prohibe en pratique le choix de cette technologie pour les aérostats destinés à voler à haute altitude, notamment les aérostats stratosphériques.

Si l'on souhaite pouvoir piloter la position horizontale (c'est-à-dire la position par rapport au sol terrestre) et/ou la trajectoire horizontale d'un aérostat libre pendant une durée importante (de quelques mois à plusieurs années), il est hors de question d'embarquer une énergie consommable. Avec l'énergie solaire, on est confronté au problème du poids des dispositifs capteurs et des moyens de stockage, compte tenu d'une part du fait que l'efficacité des moteurs électriques (notamment le rapport de la poussée sur la puissance consommée) est trop faible, et d'autre part, du vol de nuit qui doit être assuré.

De surcroît, les aérostats libres étant extrêmement sensibles aux conditions météorologiques et aux vents horizontaux, on est obligé de prévoir un volume gonflé très important pour pouvoir porter des moteurs de correction de position embarqués dont la puissance permette de compenser la traînée aérodynamique horizontale.

En particulier, on sait qu'un ballon géostationnaire stratosphérique nécessiterait un volume minimum de l'ordre de 350000 m3 et une masse minimum de l'ordre de 10 tonnes pour pouvoir porter des moteurs permettant de maîtriser sa position horizontale et/ou sa trajectoire horizontale à une altitude stratosphérique, et une charge utile telle qu'un système de télécommunications. De telles dimensions représentent un encombrement spatial important et un risque non négligeable pour la circulation aérienne et pour les populations en cas de chute ou de destruction. De surcroît, ces dimensions posent des problèmes de réalisation pratique et de lancement. En outre, l'ensemble présenterait un coût élevé pour une fiabilité relativement faible.

Or, des missions stratosphériques de longue durée de vie permettraient l'étude scientifique de la haute atmosphère, l'observation de la terre, l'amélioration des télécommunications... En particulier, il est souhaitable de pouvoir disposer en altitude stratosphérique de nombreux dispositifs pouvant servir de relais, actif ou passif, pour les liaisons hertziennes, par exemple pour les satellites de télécommunications (téléphonie mobile, radio, télévision, réseaux d'informations...) ou de localisation (systèmes GPS, Argos...).

Ainsi, le besoin se fait sentir de pouvoir disposer en altitude atmosphérique élevée, notamment en altitude stratosphérique, des véhicules dont la position ou les déplacements par rapport au sol terrestre notamment horizontalement peuvent être maîtrisés automatiquement ou depuis le sol, sans pilote humain embarqué, sur une durée pouvant être comprise entre quelques jours et plusieurs années.

GB-A-2 082 995 décrit une aile supposée être géostationnaire, rotative autour d'un noyau central pour générer une portance et dont la structure rigide peut incorporer des logements comprenant un gaz plus léger que l'air pour augmenter sa sustentation. Cet enseignement n'est pas réaliste pour au mois deux raisons : l'énergie nécessaire à maintenir la portance par rotation de l'aile serait rédhibitoire pour obtenir un engin réellement géostationnaire, notamment aux altitudes stratosphériques ; aucun dispositif concret de déplacement en translation n'est décrit.

L'invention vise donc à pallier ces inconvénients en proposant un véhicule libre destiné à une altitude atmosphérique élevée, notamment stratosphérique, et dont la position horizontale (en longitude et latitude) et/ou les déplacements horizontaux, par rapport au sol terrestre, peuvent être maîtrisés automatiquement, de façon autonome ou depuis le sol, sur une durée importante.

En particulier, l'invention vise à résoudre le problème posé par l'énergie nécessaire à la motorisation permettant de maintenir la position horizontale et/ou de suivre une trajectoire horizontale.

L'invention vise plus particulièrement à proposer un tel véhicule formé d'un aérostat destiné à une altitude atmosphérique élevée, notamment stratosphérique, dont le volume est limité, notamment compris entre 10m3 et 10000 m3, par exemple de l'ordre de 2000 m3, pour une masse comprise entre 10kg et 500kg, notamment de l'ordre de 50 à 200kg.

L'invention vise en outre à proposer un aérostat particulièrement adapté pour faire office de relais actif et/ou passif pour la transmission d'informations par voie hertzienne, notamment dans le domaine des hyperfréquences.

Pour ce faire, l'invention concerne un aérostat libre plus léger que l'air comprenant :

- une structure de rigidification définissant une forme symétrique par rapport à un axe principal,
- au moins une chambre principale fermée étanche solidaire de ladite structure et pressurisée par un gaz plus léger que l'air de façon à permettre le vol de l'aérostat,
- des moyens d'entraînement de l'aérostat comprenant :

    . un ou plusieurs propulseurs à émission de particules portés par ladite structure, régulièrement répartis autour de l'axe principal, adaptés pour pouvoir entraîner l'aérostat en rotation dans un sens autour de l'axe principal, et pour pouvoir être commandés d'un état actif à un état inactif et réciproquement, au moins une fois à chaque tour de rotation de l'aérostat autour de l'axe principal,
    . un ou plusieurs volets mobiles portés par ladite structure à l'extérieur de la chambre principale, régulièrement répartis autour de l'axe principal, adaptés pour pouvoir être commandés au moins une fois à chaque tour de rotation de l'aérostat autour de l'axe principal d'un état actif où ils freinent la rotation de l'aérostat tout en exerçant une poussée aérodynamique tendant à déplacer l'aérostat en translation perpendiculairement à l'axe principal, à un état inactif où ils n'offrent pas de résistance sensible à la rotation de l'aérostat, et réciproquement,
    . des moyens de commande embarqués adaptés pour commander les propulseurs et les volets pour:

- entraîner l'aérostat en rotation permanente autour de l'axe principal,
- entraîner l'aérostat en translation avec au moins une composante perpendiculaire à l'axe principal par rapport à la masse d'air dans laquelle il évolue.

Par "translation avec au moins une composante perpendiculaire à l'axe principal", on entend un mouvement de translation dans une direction de translation qui présente une composante non nulle selon la direction radiale à l'axe principal, c'est-à-dire qui n'est pas parallèle à l'axe principal. De préférence, avantageusement et selon l'invention, les moyens d'entraînement de l'aérostat sont adaptés pour entraîner l'aérostat en translation selon une direction de translation au moins sensiblement radiale par rapport à l'axe principal, c'est-à-dire perpendiculaire à l'axe principal.
Avantageusement, un aérostat selon l'invention présente une dimension axiale hors tout parallèlement à l'axe principal qui est inférieure à sa dimension radiale hors tout perpendiculairement à l'axe principal. De préférence, et selon l'invention, il présente une forme extérieure générale globalement symétrique de révolution autour de l'axe principal, notamment globalement lenticulaire.
Dans un mode de réalisation et selon l'invention, l'aérostat présente un rayon hors tout compris entre 5m et 50m -notamment de l'ordre de 15m-, et une hauteur axiale hors tout comprise entre 1m et 20m -notamment de l'ordre de 10m-.
Avantageusement et selon l'invention, l'aérostat comprend au moins un actuateur ionique et/ou au moins un pulseur d'air à titre de propulseur à émission de particules, ces particules étant alors des ions et/ou respectivement des molécules de gaz.
Avantageusement et selon l'invention, chacun des propulseurs est associé à une portion périphérique de ladite structure de rigidification la plus éloignée de l'axe principal, et est disposé pour exercer une force d'entraînement au moins sensiblement tangentielle. De même, avantageusement et selon l'invention, chacun des volets est associé à une portion périphérique de ladite structure la plus éloignée de l'axe principal, et est disposé pour exercer une force au moins sensiblement tangentielle.
Avantageusement et selon l'invention, chaque volet mobile s'étend au moins sensiblement radialement et est mobile parallèlement à l'axe principal entre une position escamotée dans un compartiment de volet où il n'interfère pas avec le courant d'air relatif résultant des déplacements de l'aérostat par rapport à la masse d'air dans laquelle l'aérostat est placé, et une position déployée où il interfère avec le courant d'air et tend à freiner la rotation de l'aérostat autour de l'axe principal, en exerçant une poussée aérodynamique réactive entraînant l'aérostat en translation.
En outre, avantageusement et selon l'invention, les moyens de commande embarqués sont adaptés pour que dans un premier secteur angulaire s'étendant d'un coté d'une direction radiale perpendiculaire à l'axe, principal et fixe par rapport au vent relatif (indépendante de la rotation de l'aérostat autour de l'axe principal), chaque propulseur est à l'état actif et chaque volet est à l'état inactif, alors que dans un deuxième secteur angulaire s'étendant de l'autre côté de cette direction radiale, chaque propulseur est à l'état inactif et chaque volet est à l'état actif, de sorte que l'aérostat est entraîné en translation par rapport au vent relatif au moins sensiblement selon cette direction radiale. De préférence et selon l'invention, les moyens d'entraînement sont adaptés pour pouvoir entraîner l'aérostat en rotation autour de l'axe principal à une vitesse $\omega$ au moins sensiblement constante comprise entre 1rd/s et 100rd/s, notamment de l'ordre de $2\pi$rd/s. En outre, avantageusement et selon l'invention, chaque propulseur et chaque volet est adapté pour pouvoir être commandé de l'état inactif à l'état actif et de l'état actif à l'état inactif en une durée inférieure de $2\pi/4\omega$, $\omega$ étant la vitesse de rotation de l'aérostat exprimée en radians par seconde.
Avantageusement, un aérostat selon l'invention comprend en outre des moyens de repérage de la position

de l'axe principal par rapport à un référentiel fixe par rapport au sol terrestre, et des moyens de repérage par rapport à ce même référentiel fixe de la position angulaire (en rotation) de la structure par rapport à l'axe principal, et lesdits moyens de commande comprennent des moyens de calcul adaptés pour déterminer les signaux de commande à appliquer à chaque propulseur et à chaque volet en fonction de signaux délivrés par ces moyens de repérage, et selon un signal de consigne prédéterminé de la position horizontale et/ou de la trajectoire horizontale de l'axe principal par rapport au référentiel fixe.

Avantageusement, l'aérostat selon l'invention est caractérisé en ce qu'il comprend au moins une enveloppe externe souple délimitant au moins une chambre principale étanche aux gaz pressurisée par un gaz plus léger que l'air, et en ce que chacun des volets mobiles est disposé à l'extérieur de cette enveloppe exteme. De même, chaque propulseur est fixé à la structure à l'intérieur de l'enveloppe, et présente une tuyère d'éjection de particules traversant l'enveloppe de façon étanche pour émettre les particules à l'extérieur de l'enveloppe.

Avantageusement et selon l'invention, le gaz est formé d'hélium, et le volume de la chambre principale est adapté pour permettre le vol stratosphérique de l'aérostat.

Avantageusement et selon l'invention, l'aérostat est en outre caractérisé en ce que la structure comprend un ballon torique périphérique étanche aux gaz et surpressurisé par un gaz plus léger que l'air à une pression supérieure à celle de la chambre principale, en ce qu'il comprend autant de propulseurs que de volets, et en ce qu'il comprend des pièces de support fixées à ce ballon, régulièrement réparties autour de l'axe principal, chaque pièce de support portant au moins un propulseur et/ou au moins un volet mobile.

Dans un mode de réalisation, et selon l'invention, la structure comprend :

- un noyau central globalement cylindrique rigide creux apte à renfermer les équipements électroniques et/ou informatiques et/ou de télécommunications et/ou de stockage d'énergie et/ou des équipements d'une mission embarquée,
- un ballon torique périphérique surpressurisé,
- des pièces de support fixées au ballon torique périphérique et portant le(s) propulseur(s) et le(s) volet(s) mobile(s),
- des moyens de liaison reliant le noyau central et les pièces de support,

et une enveloppe externe entoure et/ou complète le volume délimité par le ballon torique périphérique et le noyau central pour circonscrire au moins une chambre principale étanche pressurisée.

En outre, un aérostat selon l'invention comprend une source d'énergie embarquée adaptée pour assurer l'alimentation en énergie au moins de chaque propulseur. De préférence et selon l'invention, cette source d'énergie est aussi adaptée pour assurer l'alimentation en énergie d'organes moteurs de manoeuvre des volets, ainsi que l'alimentation en énergie des moyens de commande, des moyens de repérage, et de la mission embarquée, c'est-à-dire de l'ensemble de l'aérostat qui est alors totalement autonome du point de vue de son alimentation en énergie.

Avantageusement et selon l'invention, la source d'énergie comprend :

- des cellules solaires photovoltaïques disposées sur au moins une portion de face supérieure de l'aérostat,
- des moyens de stockage d'énergie électrique.

Les moyens de stockage d'énergie électrique peuvent être formés d'accumulateurs rechargeables et/ou de pile(s) à combustible. Leur capacité est déterminée de façon à permettre le vol de nuit.

L'invention permet ainsi d'obtenir un aérostat libre pouvant être lancé en altitude haute, notamment stratosphérique, et dont la position horizontale et/ou la trajectoire horizontale peuvent être maîtrisées automatiquement sur une longue durée. En particulier, il est à noter que les moyens d'entraînement de l'aérostat permettent d'utiliser pour le déplacement en translation horizontale de l'aérostat, la majeure partie de l'énergie cinétique des particules émises par les propulseurs qui sont eux-mêmes déplacés par rapport à la masse d'air (par la rotation de l'aérostat) à une vitesse très supérieure à la vitesse de translation horizontale de l'aérostat. La puissance de propulsion développée par chaque propulseur est grandement augmentée par rapport au cas d'un aérostat non entraîné en rotation permanente. Pour une même force résultante de propulsion en translation horizontale, l'invention permet de réduire considérablement la consommation d'énergie, et donc la masse de la source d'énergie (cellules solaires, stockage...), facteur déterminant dans le cadre de la réalisation d'un aérostat libre de longue durée géostationnaire ou mobile selon une trajectoire prédéterminée.

D'autres caractéristiques, buts et avantages de l'invention apparaîtront à la lecture de la description qui suit qui se réfère aux figures annexées dans lesquelles :

- la figure 1 est une vue en coupe axiale (partie gauche) et en élévation (partie droite) d'un aérostat selon un mode de réalisation de l'invention,
- la figure 2 est une vue en perspective de l'aérostat de la figure 1,

- la figure 3 est une vue de dessous partiellement arrachée de l'aérostat de la figure 1,
- la figure 4 est une vue de dessus de l'aérostat de la figure 1,
- la figure 5 est un schéma de principe illustrant le fonctionnement des moyens d'entraînement d'un aérostat selon l'invention.

L'aérostat représenté sur les figures comprend une structure de rigidification 1, 3, 4, 5 comportant un noyau central 1 globalement cylindrique de révolution autour d'un axe principal 2 ; un ballon torique 3 périphérique surpressurisé symétrique de révolution autour de l'axe principal 2 ; des pièces de support 4 fixées au ballon torique périphérique 3 ; et des organes de liaison 5 reliant le noyau central 1 et les pièces de support 4, de préférence sous forme de câbles souples. Ces organes de liaison 5 sont adaptés pour qu'en position de vol le ballon torique périphérique 3 soit centré sur l'axe principal 2. En effet, l'aérostat étant entraîné en rotation permanente, dans le cas où ces liaisons 5 sont formées de câbles, ceux-ci sont tendus par la force centripète.

Cette structure de rigidification est équilibrée par rapport à l'axe principal 2. Il en va de même de l'ensemble de l'aérostat. Cet équilibrage est obtenu par une répartition régulière des masses autour de l'axe 2, et si nécessaire, par des masses additionnelles d'équilibrage placées après le montage complet de l'aérostat. La structure de rigidification et l'ensemble de l'aérostat (à l'exception des organes incorporés à l'intérieur du noyau central 1) présentent une symétrie angulaire autour de l'axe principal 2, c'est-à-dire peuvent être considérés comme résultant de la juxtaposition autour de l'axe principal 2 d'une pluralité de secteurs angulaires semblables.

Dans le mode de réalisation représenté, le noyau central 1, le ballon torique 3, et les organes de liaison 5 présentent une symétrie par rapport à un plan médian perpendiculaire à l'axe principal 2 coupant diamétralement la section droite transversale du ballon torique 3. Cette symétrie n'est cependant pas nécessaire, l'aérostat selon l'invention pouvant être de section axiale dissymétrique.

Les pièces de support 4 sont fixées au ballon torique périphérique 3, par exemple par collage ou soudure, du côté intérieur, c'est-à-dire du côté de l'axe principal 2. Chaque pièce de support 4 est en forme générale d'arc de portion de tore de forme correspondant à celle du ballon torique périphérique 3 auquel elle est collée. Chaque pièce de support 4 est reliée au noyau central 1, par exemple par quatre câbles 5, à savoir deux câbles supérieurs 5a et deux câbles inférieurs 5b, fixés rigidement au voisinage de chacune des extrémités de la pièce de support 4. Les câbles 5 sont fixés d'une part à la pièce de support 4 correspondante, et d'autre part au noyau central 1 par tout dispositif de fixation rigide approprié (bride, serre-câble, bouclage de l'extrémité du câble dans un anneau...). Le ballon torique 5 est solidaire en rotation du noyau central 1.

Le noyau central 1 est globalement cylindrique de révolution autour de l'axe principal 2, rigide, creux, et est adapté pour pouvoir enfermer les équipements électroniques et/ou informatiques et/ou de télécommunications et/ou de stockage d'énergie et/ou des équipements d'une mission embarquée. Dans le mode de réalisation représenté, le noyau central 1 comprend un fond 6 et un couvercle 7. Il est à noter néanmoins que ce fond 6 et ce couvercle 7 ne sont pas indispensables, les différents équipements pouvant être fixés directement aux parois cylindriques à l'intérieur du noyau 1. De préférence, les parois formant le noyau central cylindrique 1 sont ajourées et formées d'un matériau léger rigide, par exemple un composite à base de fibres de carbone, de façon à être aussi léger que possible. Il en va de même des pièces de support 4.

Les différentes pièces de support 4 sont régulièrement réparties autour de l'axe principal 2. Ainsi, l'aérostat peut comprendre deux pièces de support 4 diamétralement opposées. Dans le mode de réalisation préférentiel représenté, l'aérostat comprend trois pièces de support 4 régulièrement réparties à 120°C les unes des autres autour de l'axe 2.

Chaque pièce de support 4 porte un propulseur 8 à émission de particules et/ou un volet mobile 9.

Dans le mode de réalisation le plus élémentaire de l'aérostat selon l'invention, celui-ci comprend deux pièces de support 4 diamétralement opposées, l'une d'entre-elles portant un propulseur 8, tandis que l'autre porte un volet mobile 9. Dans le mode de réalisation préférentiel représenté, avantageusement et selon l'invention, chaque pièce de support 4 porte un propulseur 8 et un volet mobile 9, et l'aérostat comprend une pluralité de pièces de support 4 -notamment plus de deux pièces de support 4-, une pluralité de propulseurs 8 -notamment plus de deux propulseurs 8-, et une pluralité de volets mobiles 9 -notamment plus de deux volets mobiles 9-.

Les propulseurs 8 sont formés d'actuateurs ioniques et/ou de pulseurs d'air. A titre d'actuateur ionique, on peut par exemple utiliser un moteur ionique à effet corona. A titre de pulseur d'air, on peut utiliser un-compresseur d'air axial. De tels propulseurs à émission de particules sont connus en eux-mêmes.

Chaque propulseur 8 peut être alimenté en air atmosphérique à partir du compartiment 11 de volet 9, notamment celui fixé à la même pièce de support 4. Pour ce faire, chaque compartiment 11 de volet présente une ouverture 27 d'entrée d'air à l'amont du volet 9, et une conduite de liaison 26 avec le propulseur 8, de sorte que l'air entre à l'amont du volet 9 dans le compartiment 11 et est alimenté au propulseur 8 par la conduite 26. L'air est capté dans le compartiment 11 lorsque le volet 9 est déployé, et est stocké dans ce compartiment 11 jusqu'à ce qu'il soit utilisé pour alimenter le propulseur 8 lorsque ce dernier est activé.

Chaque propulseur 8 est fixé à une pièce de support 4 par tous moyens de fixation appropriés (bride, collier, soudure...), et présente une tuyère 10 d'éjection de particules, de forme globalement cylindrique. Tous les propulseurs 8 de l'aérostat sont orientés dans le même sens, c'est-à-dire avec leurs tuyères d'éjection 10 orientées pour entraîner l'aérostat en rotation autour de son axe principal 2 dans le même sens. Chaque propulseur 8 est fixé à la pièce de support 4 de façon que sa tuyère d'éjection 10 s'étende au moins sensiblement selon la direction perpendiculaire à la bissectrice du secteur angulaire défini par l'arc de portion de tore formé par la pièce de support 4 correspondante. Ainsi, chaque propulseur 8 est fixé à la pièce de support 4 de façon à exercer une force d'entraînement au moins sensiblement tangentielle (par rapport au ballon torique périphérique 3 à son point d'intersection avec la bissectrice du secteur angulaire défini par la pièce de support 4).

En outre, l'aérostat est destiné à voler avec l'axe principal 2 s'étendant au moins sensiblement verticalement, avec le plan médian perpendiculaire à l'axe 2 s'étendant au moins sensiblement horizontalement comme représenté sur les figures. Pour abaisser au maximum le centre de gravité de l'aérostat et assurer sa stabilité horizontale, on dispose de préférence les propulseurs 8 en position aussi basse que possible, en partie inférieure des pièces de support 4, sous les câbles 5b inférieurs comme représenté sur les figures.

Chaque volet mobile 9 est intégré et porté dans un compartiment 11 qui est lui-même rigidement fixé à l'une des pièces de support 4, par exemple grâce à un tube ou à des barres de liaison 12. Chaque compartiment 11 et les éléments de liaison 12 qui permettent de l'attacher à la pièce de support 4 sont formés en matériau rigide, par exemple un composite à base de fibres de carbone. Chaque volet 9 est monté dans le compartiment 11 de façon à s'étendre au moins sensiblement dans un plan axial, c'est-à-dire dans un plan contenant l'axe principal 2 et une direction radiale à cet axe principal 2. Chaque compartiment 11 s'étend globalement à l'intérieur de l'espace compris entre le ballon torique périphérique 3 et le noyau central 1, le plus loin possible de l'axe principal 2. Dans le mode de réalisation représenté, chaque compartiment 11 comprend un seul volet 9 monté rotatif autour d'un arbre 13 orthogonal à l'axe principal 2 et porté par le compartiment 11. Le compartiment 11 est dimensionné de telle sorte que le volet 9 puisse être totalement escamoté et intégré dans ce compartiment 11, à l'état inactif. Egalement, le volet 9 est monté par rapport au compartiment 11 de façon à pouvoir être déployé à l'état actif où il freine la rotation de l'aérostat autour de l'axe principal 2 tout exerçant une poussée aérodynamique tendant à déplacer l'aérostat en translation perpendiculairement à l'axe principal 2. Dans le mode de réalisation représenté, chaque compartiment 11 est ouvert vers le haut et le volet 9 mobile est monté de façon à pouvoir se déployer vers le haut verticalement par rotation autour de l'arbre 13, grâce à un moteur électrique 14 incorporé à l'intérieur du compartiment 11 sur l'arbre 13.

En variante, il serait également possible de prévoir que les volets 9 et les compartiments 11 correspondants soient montés de façon à ce que les volets se déploient vers le bas. Il est également possible de prévoir en variante dans chaque compartiment 11 fixé à une pièce de support 4, deux volets 9 se déployant respectivement l'un vers le haut, l'autre vers le bas pour assurer un freinage de la rotation de part et d'autre du plan horizontal médian. Les volets peuvent aussi être mobiles non pas en rotation, mais en translation, ou selon un mouvement combinant rotation(s) et translation(s). Par ailleurs, chacun des volets 9 peut également être profilé à la façon d'un aérofrein. La fonction de ces volets est en effet de procurer une poussée aérodynamique maximale à l'état actif pour un poids de l'ensemble volet 9, compartiment 11, moteur 14 et cinématique 13 de commande minimum.

L'aérostat comprend en outre une enveloppe 15 externe souple, par exemple formée de MYLAR ®, délimitant une chambre principale 16 étanche aux gaz pressurisée, ainsi que le ballon torique 3, par un gaz plus léger que l'air, par exemple l'hélium. Cette enveloppe 15 s'étend autour du ballon torique périphérique 3 et vers l'axe principal 2 au-dessus et au-dessous du noyau central 1.

Chacune des tuyères d'éjection 10 des propulseurs 8 traverse l'enveloppe 15 de façon étanche, de sorte que les particules émises par les propulseurs 8 sont éjectées à l'extérieur de la chambre principale 16. De même, chacun des volets mobiles 9 est disposé à l'extérieur de l'enveloppe exteme 15, celle-ci étant interrompue et ouverte au ras des bords 22 périphériques de l'ouverture des compartiments 11 des volets.

La face supérieure 17 de la portion supérieure 24 de l'enveloppe 15 est recouverte d'un ensemble de cellules solaires photovoltaïques 21, qui peuvent s'étendre jusqu'au compartiment 11 de volet, voire même jusqu'à la partie périphérique extrême de l'enveloppe 15 autour des ouvertures des compartiments 11 si nécessaire. Cet ensemble de cellules solaires 21 est relié électriquement à l'intérieur du noyau central 1 par des conducteurs électriques appropriés qui traversent l'enveloppe 15 de façon étanche, et sont reliés à des moyens de stockage 18 d'énergie électrique formés d'une batterie d'accumulateurs ou d'une pile à combustible (par exemple telle que celles qui ont été utilisées dans les programmes spatiaux (APOLLO, NAVETTE SPATIALE...)). Là encore, les moyens de stockage 18 présentant la plus grande capacité pour un poids le plus faible seront privilégiés. Ces moyens de stockage 18 d'énergie électrique sont incorporés à l'intérieur du noyau central 1, ainsi que des moyens 19 électroniques et/ou informatiques de commande des propulseurs 8 et des volets 9.

Des conducteurs électriques 20 relient électriquement ces moyens 19 de commande à l'intérieur du noyau central 1, d'une part à chacun des propulseurs 8, et d'autre part à chaque moteur 14 d'entraînement des volets mobiles 9, à travers la paroi du compartiment 11 que ces conducteurs 20 traversent de façon étanche. Les conducteurs 20

sont par exemple portés par l'un au moins des câbles 5 de liaison des pièces de support 4 au noyau central 1, de préférence un câble 5b inférieur de liaison.

L'aérostat selon l'invention présente ainsi une forme extérieure générale (c'est-à-dire le contour extérieur défini par l'enveloppe 15 externe) qui est globalement symétrique de révolution autour de l'axe principal 2. Cette forme est en outre globalement lenticulaire, sa dimension axiale parallèlement à l'axe principal 2 étant inférieure à sa dimension radiale hors tout perpendiculairement à l'axe principal 2. En outre, les formes de l'aérostat selon l'invention sont définies de façon à minimiser le coefficient de frottement aérodynamique horizontal Cx (perpendiculairement à l'axe 2). Avantageusement, l'aérostat selon l'invention présente un diamètre hors tout compris entre 5m et 100m -notamment de l'ordre de 30m-, et une hauteur axiale hors tout comprise entre 1m et 20m -notamment de l'ordre de 10m- correspondant à la hauteur axiale du noyau central 1. Le diamètre du noyau central 1 est aussi faible que possible compte tenu du volume ainsi délimité destiné à contenir les moyens de stockage 19 d'énergie électrique et les différents équipements électroniques et informatiques.

Le volume de la chambre principale 16 fermée étanche aux gaz est adapté pour permettre le vol de l'aérostat, notamment en altitude stratosphérique. Cette chambre principale 16 peut être formée d'un seul volume ou de plusieurs volumes imbriqués et/ou juxtaposés. Elle peut ainsi être compartimentée et/ou renfermer des ballonnets.

Par exemple, la chambre principale 16 est pressurisée à une surpression (par rapport à la pression atmosphérique de l'altitude de vol souhaitée) de l'ordre de 300Pa alors que le ballon torique périphérique 3 est pressurisé à une surpression (par rapport à la pression atmosphérique de l'altitude de vol souhaitée) de l'ordre de 500Pa, c'est-à-dire surpressurisé par rapport à la chambre principale 16 d'une surpression de l'ordre de 200Pa. De la sorte, le ballon torique périphérique 3 impose et maintient la forme générale lenticulaire de l'aérostat.

En outre, il est à noter que l'aérostat présente une surface apparente vue du sol extrêmement importante rapportée à sa masse totale. Ainsi, l'aérostat selon l'invention peut incorporer une surface radioélectrique réfléchissante par exemple du type permettant de réfléchir vers le sol les signaux radioélectriques en provenance du sol. Par exemple, la face interne 23 orientée vers le bas de la portion supérieure 24 de l'enveloppe externe 15, peut être métallisée, la portion inférieure 25 de l'enveloppe externe 15 étant de constituée de matériaux radioélectriquement transparents. Ainsi, la portion supérieure 24 de l'enveloppe 15 présente une surface réfléchissante concave orientée vers le sol. En variante, on peut également incorporer une telle surface réfléchissante de forme appropriée, et plus généralement tout type d'antenne de radiocommunication, active ou passive, à l'intérieur même de l'aérostat, dans la chambre principale 16 entre le ballon torique 3 et le noyau central 1.

L'aérostat selon l'invention comprend également au moins un récepteur de type GPS ("GLOBAL POSITIONING SYSTEM") ou DORIS..., ou tout autre dispositif de repérage (gyroscope, moyens de télémétrie, accéléromètre, magnétomètre,...) permettant de repérer la position de l'axe principal 2 par rapport à un référentiel fixe par rapport au sol terrestre d'une part, et d'autre part, la position angulaire de l'aérostat dans sa rotation autour de l'axe principal 2.

Dans un mode de réalisation avantageux de l'invention, l'aérostat comprend un récepteur GPS permettant de repérer sa position avec une précision de l'ordre de 100m par rapport au sol terrestre. En outre, pour repérer la position angulaire de rotation de l'aérostat autour de l'axe principal 2, celui-ci incorpore un magnétomètre dont la précision est de l'ordre du degré, et qui pourra être étalonné en fonction du champ magnétique local. Ce récepteur GPS et ce magnétomètre sont portés à l'intérieur du noyau central 1.

A titre de récepteur GPS, on peut par exemple utiliser un récepteur GPS TANS VECTOR de détermination d'altitude et de position commercialisé par la société TRIMBLE NAVIGATION (Hampshire, Angleterre). Les antennes du récepteur sont placées et fixées soit à la périphérie du noyau 1, soit sur les pièces de support 4, au voisinage du ballon torique 3, soit sur le ballon torique 3 à la périphérie extrême de l'aérostat.

L'aérostat comprend également avantageusement des moyens d'émission/réception permettant la communication avec le sol, notamment pour la programmation de sa position horizontale et/ou de sa trajectoire horizontale. Il incorpore également des moyens informatiques de calcul permettant, à partir d'une position de consigne prédéterminée, (programmée à l'avance ou reçue du sol), et de la position déterminée par les moyens de repérage, de déterminer un cap de translation horizontale. Ce cap peut être simplement la droite qui passe par la position de consigne et par la position repérée, en tenant éventuellement compte du vent relatif, c'est-à-dire de la dérive. Un tel système informatique de navigation est connu en lui-même et n'a pas à être décrit en détail.

Les moyens 19 de commande embarqués sont adaptés pour que dans un premier secteur angulaire 28 s'étendant d'un coté d'une direction radiale Da perpendiculaire à l'axe principal 2 et fixe par rapport au vent relatif (indépendante de la rotation de l'aérostat autour de l'axe principal 2), correspondant au cap de translation horizontale à donner à l'aérostat, chaque propulseur 8 est à l'état actif et chaque volet 9 est à l'état inactif, alors que dans un deuxième secteur angulaire 29 s'étendant de l'autre côté de cette direction radiale Da, chaque propulseur 8 est à l'état inactif et chaque volet 9 est à l'état actif, de sorte que l'aérostat est entraîné en translation par rapport au vent relatif selon cette direction radiale Da.

Le premier secteur angulaire 28 et le deuxième secteur angulaire 29 sont de préférence bissecteurs de l'angle plat défini par la direction Da, c'est à dire qu'une droite perpendiculaire à Da est bissectrice de chacun de ces secteurs

angulaires 28, 29. En outre, ces secteurs angulaires 28, 29 ont de préférence au moins sensiblement la même valeur angulaire inférieure à 180°, et sont symétriques l'un de l'autre par rapport à la direction Da.

Les propulseurs 8 et les volets 9 sont adaptés pour pouvoir être commandés de l'état inactif à l'état actif, et de l'état actif à l'état inactif en une durée inférieure à $2\pi/4\omega$, $\omega$ étant la vitesse de la rotation de l'aérostat exprimée en radians par seconde, qui est avantageusement comprise entre 1rd/s et 100rd/s -notamment de l'ordre de $2\pi$rd/s.

Le schéma de la figure 5 illustre le fonctionnement d'un aérostat selon l'invention dans le cas d'un seul propulseur 8 et d'un seul volet mobile 9 radialement opposés par rapport à l'axe principal 2 (cette hypothèse étant prise pour des raisons de simplification des calculs). Considérons un propulseur 8 projetant des particules (ions, atomes...) à une vitesse relative V1 supposée homogène, avec un débit massique D (en kg/s) et induisant une force de propulsion Fa appliquée au centre de gravité G.

On appelle A le point d'accrochage du propulseur 8, Va la vitesse de ce propulseur 8, G le centre de gravité supposé placé sur l'axe principal 2 de rotation et Vg la vitesse du centre de gravité G par rapport à la masse d'air.

Les particules sont émises selon une direction au moins sensiblement opposée à celle du vecteur vitesse $\overrightarrow{Vg}$ . En première approximation, l'effet du propulseur 8 peut de se décomposer en une force Fa appliquée au centre de gravité et un couple Ca autour de l'axe de rotation, tels que :

$$Fa=V1.D$$

$Ca=V1.D.R$, R étant la distance de A à G

Considérons maintenant la présente d'un volet mobile 9 centré en un point distant de l'axe 2 et de G d'une distance R', R'<R, se déplaçant à une vitesse Vv :

$$Vv= Vg+\frac{R'}{R}.Va$$

L'action de ce volet 9 se traduit par une force de poussée Fv et un couple Cv autour de l'axe 2 de rotation.

$$Cv=-Fv.R'$$

On suppose que l'on fait coïncider la sortie du volet 9 avec la poussée du propulseur 8 radialement opposé (en supposant que le volet mobile 9 puisse être sorti et rentré infiniment rapidement).

Il est à noter que la résultante des forces de traînées (hormis celles dues au volet 9) ne se situe pas nécessairement sur l'axe 2 de rotation (en raison de la rotation de l'aérostat), et peut induire ainsi un couple de traînée aérodynamique. Pour simplifier le calcul, on supposera ce couple négligeable.

Le calculateur de bord gère la surface de sortie du volet 9 afin que l'accélération angulaire moyenne globale soit nulle (la vitesse de rotation de l'aérostat restant au moins sensiblement constante) :

$$Ca+Cv=O$$

$$Fa.R-Fv.R'=O$$

$$Fv=\frac{R}{R'}.Fa$$

La force de poussée globale Fp est donc égale à :

$$Fp=Fv+Fa=Fa.[1+\frac{R}{R'}]$$

Les moyens 19 de commande commandent chaque propulseur 8 de telle façon que la force exercée par le propulseur 8 soit en moyenne orientée parallèlement à la direction d'avancement Da souhaitée. De même, les moyens 19 de commande commandent chaque volet 9 de telle façon que la force exercée par le volet 9 soit en moyenne orientée parallèlement à la direction d'avancement Da souhaitée. Pour ce faire, il suffit que la durée du passage de l'état inactif à l'état actif du propulseur 8, ou du volet 9 soit la même que celle du passage de l'état actif à l'état inactif,

et que la trajectoire décrite par le propulseur 8, ou le volet 9, à l'état actif soit symétrique par rapport à la droite perpendiculaire à la direction d'avancement Da et à l'axe principal 2.

De préférence, la position angulaire d'un volet 9 à partir de laquelle il commence à être activé est fixe par rapport à la direction d'avancement Da souhaitée et est radialement alignée avec la position angulaire, fixe par rapport à la direction d'avancement Da souhaitée, à partir de laquelle un propulseur 8 commence à être activé. De même, la position angulaire fixe par rapport à la direction d'avancement Da souhaitée à partir de laquelle un volet 9 fini d'être activé est radialement alignée avec la position angulaire, fixe par rapport à la direction d'avancement Da souhaitée, d'un propulseur 8 à partir de laquelle il est complètement inactif. Ainsi, on a représenté sur la figure 4 la droite Di représentant la position angulaire à partir de laquelle un volet 9 commence à être déployé (actif) et un propulseur 8 à l'opposé par rapport à l'axe 2 commence à être activé, et la droite Df représentant la position angulaire à partir de laquelle un volet 9 fini d'être complètement escamoté (inactif) et un propulseur 8 est complètement inactif. Ces deux droites Di, Df forment entre elles un angle représentant la course angulaire lors de laquelle le volet 9 et, à l'opposé, un propulseur 8 est actif. On appelle $\alpha$max la valeur égale à la moitié de cet angle. La direction Da d'avancement est une bissectrice de Di et Df. Les droites Di et Df définissent entre elles lesdits premier secteur angulaire 28 et deuxième secteur angulaire 29.

Chaque propulseur 8 est activé pendant une portion de la période de rotation, et la direction de la poussée n'est pas toujours parfaitement alignée avec le vecteur vitesse, induisant une perte d'efficacité que l'on peut traduire en terme de rendement r. Si un propulseur 8 et un volet 9 ne sont activés que lorsque le dépointage de la force de poussée Fp est inférieur à l'angle $\alpha$max, le rendement r vaut :

$$r = \frac{1}{2\alpha\max} . \int_{-\alpha\max}^{+\alpha\max} \cos\alpha . d\alpha = \frac{\sin\alpha\max}{\alpha\max}$$

Finalement, le facteur de gain global $\gamma$ de la propulsion de l'aérostat selon l'invention par rapport à un propulseur fixe est :

$$\gamma = r.[1+\frac{R'}{R}]$$

Il est à noter que pour $\alpha$max=40°, r ≅ 0.92

Le gain $\gamma$ permet de réduire la puissance, et donc la masse, de chaque propulseur 8 par rapport au besoin en force de poussée.

Dans le cas d'un aéronef classique (conforme à l'état de la technique antérieure) non rotatif portant des propulseurs, l'énergie cinétique des particules émises par les propulseurs (animées d'une vitesse qui est classiquement de l'ordre de quelques centaines de mètres par seconde) n'est que faiblement transmise à l'aéronef dont la vitesse est relativement faible (typiquement 10m/s). Après éjection, les particules demeurent animées d'une forte vitesse correspondant à une énergie cinétique inutilisée.

Dans le cas de l'aérostat selon l'invention, le propulseur 8 est lui-même animé d'une forte vitesse (inférieure à la vitesse d'éjection des particules mais très supérieure à la vitesse en translation de l'aérostat), de direction opposée à celle d'éjection des particules. Ces dernières, une fois éjectées, sont animées d'une vitesse nettement inférieure à celle qu'elles auraient eue si le propulseur 8 avait été immobile, que l'on peut considérer comme une meilleure utilisation de l'énergie de propulsion.

Plus directement, la puissance d'une force appliquée en un point donné étant égale au produit de cette force par la vitesse de ce point, la puissance de propulsion développée par le propulseur 8 est très supérieure dans le cas de l'aérostat selon l'invention que dans le cas d'un aéronef classique. Il en résulte en particulier qu'un aérostat selon l'invention peut être alimenté entièrement à partir de l'énergie solaire, et ainsi être maintenu en position géostationnaire en haute atmosphère.

A titre d'exemple on peut avoir, avec un aérostat selon l'invention :

- rayon R de l'aérostat : 15 m
- hauteur H de l'aérostat au niveau de l'axe principal 2 (dimension axiale hors tout) : 10 m
- volume à une altitude de 21 km : 2200 $m^3$
- surface externe : 1700 $m^2$
- masse : 150 kg
- vitesse maximale en translation par rapport au vent relatif : 150 km/h

- puissance électrique consommée : 20 kW
- Vg=10m/s ; $\omega=2\pi rad/s$ ; $\alpha max= 40°$ ; r=92% ; $Va=\omega R=94m/s$ ; R'=10m ; Vv=53m/s ; $\gamma=0.92x(1+15/10)\approx 2,3$.

Les moyens 19 électroniques et/ou informatiques de commande permettent de piloter l'aérostat selon l'invention selon une logique de commande permettant d'en commander la position et/ou la trajectoire. De tels moyens de commande sont connus en eux-mêmes. On peut par exemple utiliser des moyens de commande tels que ceux décrits dans la publication «THE PRONAOS PROJECT : DESIGN, DEVELOPMENT AND IN-FLIGHT RESULTS», F. BUISSON et al, IAF-97, Turin, 6/10/97.

Par ailleurs, la conservation de l'assiette horizontale de l'aérostat est assurée de façon passive dès lors que le centre de gravité G est en dessous du plan horizontal médian. Toute déviation de l'assiette horizontale entraînera alors un couple de rappel proportionnel au sinus de l'angle de déviation.

De plus, en présence de fort vent relatif quasi-horizontal, l'aérostat selon l'invention se comporte comme une aile d'avion et toute déviation (inférieure à une valeur limite) par rapport à l'assiette horizontale introduit un couple de rappel aérodynamique.

Des aérostats selon l'invention peuvent être placés en altitude stratosphérique, par exemple à 21 km du sol.

L'invention peut être appliquée notamment pour la réalisation de systèmes de localisation de mobiles terrestres, maritimes ou aéronautique, notamment par mesure différentielle de longueur du trajet radioélectrique entre des mobiles et des aérostats selon l'invention, ou pour la réalisation de systèmes de télécommunications, notamment pour les applications multimédia et les communications avec des mobiles.

## Revendications

1. Aérostat libre comprenant :

   - une structure de rigidification (1,3,4,5) définissant une forme symétrique par rapport à un axe principal (2),
   - au moins une chambre principale (16) fermée étanche solidaire de ladite structure et pressurisée par un gaz plus léger que l'air de façon à permettre le vol de l'aérostat,
   - des moyens (8, 9) d'entraînement de l'aérostat comprenant:

     . un ou plusieurs propulseurs (8) à émission de particules portées par ladite structure régulièrement répartis autour de l'axe principal (2), adaptés pour pouvoir entraîner l'aérostat en rotation dans un sens autour de l'axe principal (2), et pour pouvoir être commandés d'un état actif à un état inactif et réciproquement au moins une fois à chaque tour de rotation de l'aérostat autour de l'axe principal (2),
     . un ou plusieurs volets (9) mobiles portés par ladite structure à l'extérieur de la chambre principale, (16) régulièrement répartis autour de l'axe principal (2), adaptés pour pouvoir être commandés au moins une fois à chaque tour de rotation de l'aérostat autour de l'axe principal (2), d'un état actif où ils freinent la rotation de l'aérostat tout en exerçant une poussée aérodynamique tendant à déplacer l'aérostat en translation perpendiculairement à l'axe principal (2), à un état inactif où ils n'offrent pas de résistance sensible à la rotation de l'aérostat, et réciproquement,
     . des moyens (19) de commande embarqués adaptés pour commander les propulseurs (8) et les volets (9) pour:

   - entraîner l'aérostat en rotation permanente autour de l'axe principal (2),
   - entraîner l'aérostat en translation avec au moins une composante perpendiculaire à l'axe principal (2) par rapport à la masse d'air dans laquelle il évolue.

2. Aérostat selon la revendication 1, **caractérisé en ce qu'**il présente une dimension axiale hors tout parallèlement à l'axe principal (2) inférieure à sa dimension radiale hors tout perpendiculairement à l'axe principal (2).

3. Aérostat selon la revendication 2, **caractérisé en ce qu'**il présente une forme extérieure générale globalement symétrique de révolution autour de l'axe principal (2), notamment globalement lenticulaire.

4. Aérostat selon l'une des revendications 1 à 3, **caractérisé en ce qu'**il comprend au moins un propulseur (8) qui est un actuateur ionique.

5. Aérostat selon l'une des revendications 1 à 4, **caractérisé en ce qu'**il comprend au moins un propulseur (8) qui est un pulseur d'air.

6. Aérostat selon l'une des revendications 1 à 5, **caractérisé en ce qu'**il comprend au moins une enveloppe externe (15) souple délimitant au moins une chambre principale (16) étanche aux gaz pressurisée par un gaz plus léger que l'air, et **en ce que** chacun des volets mobiles (9) est disposé à l'extérieur de cette enveloppe externe (15).

7. Aérostat selon la revendication 6, **caractérisé en ce que** chaque propulseur (8) est fixé à la structure (1, 3, 4, 5) à l'intérieur de l'enveloppe (15), et présente une tuyère d'éjection (10) de particules traversant l'enveloppe (15) de façon étanche.

8. Aérostat selon l'une des revendications 1 à 7, **caractérisé en ce qu'**il comprend une source (21, 18) d'énergie embarquée adaptée pour assurer l'alimentation en énergie au moins de chaque propulseur (8).

9. Aérostat selon la revendication 8, **caractérisé en ce que** la source (21, 18) d'énergie comprend :

- des cellules solaires (21) photovoltaïques disposées sur au moins une portion de face supérieure (17) de l'aérostat,
- des moyens (18) de stockage d'énergie électrique.

10. Aérostat selon l'une des revendications 1 à 9, **caractérisé en ce que** les moyens (19) de commande embarqués sont adaptés pour que, dans un premier secteur angulaire (28) s'étendant d'un coté d'une direction radiale (Da) perpendiculaire à l'axe principal (2) et fixe par rapport au vent relatif chaque propulseur (8) est à l'état actif et chaque volet (9) est à l'état inactif, alors que dans un deuxième secteur angulaire (29) s'étendant de l'autre côté de cette direction radiale (Da), chaque propulseur (8) est à l'état inactif et chaque volet (9) est à l'état actif, de sorte que l'aérostat est entraîné en translation par rapport au vent relatif au moins sensiblement selon cette direction radiale (Da).

11. Aérostat selon l'une des revendications 1 à 10, **caractérisé en ce que** les moyens (8, 9) d'entraînement sont adaptés pour pouvoir entraîner l'aérostat en rotation à une vitesse $\omega$ comprise entre 1rd/s et 100rd/s.

12. Aérostat selon la revendication 11, **caractérisé en ce que** la vitesse $\omega$ est de l'ordre de $2\pi$ rd/s.

13. Aérostat selon l'une des revendications 1 à 12, **caractérisé en ce que** chaque propulseur (8) et chaque volet (9) est adapté pour pouvoir être commandé de l'état inactif à l'état actif et de l'état actif à l'état inactif en une durée inférieure à $2\pi/4\omega$, $\omega$ étant la vitesse de rotation de l'aérostat exprimée en radians par seconde.

14. Aérostat selon l'une des revendications 1 à 13, **caractérisé en ce qu'**il comprend des moyens de repérage de la position de l'axe principal (2) par rapport à un référentiel fixe par rapport au sol terrestre, et des moyens de repérage par rapport à ce référentiel fixe, de la position angulaire de la structure (1, 3, 4, 5) par rapport à l'axe principal (2), et **en ce que** lesdits moyens (19) de commande comprennent des moyens de calcul adaptés pour déterminer les signaux de commande à appliquer à chaque propulseur (8) et à chaque volet (9) en fonction de signaux délivrés par ces moyens de repérage, et selon un signal de consigne prédéterminé de la position horizontale et/ou de la trajectoire horizontale de l'axe principal (2) par rapport au référentiel fixe.

15. Aérostat selon l'une des revendications 1 à 14, **caractérisé en ce que** chacun des propulseurs (8) est associé à une portion (3, 4) périphérique de la structure (1, 3, 4, 5) la plus éloignée de l'axe principal (2) et est disposé pour exercer une force d'entraînement au moins sensiblement tangentielle.

16. Aérostat selon l'une des revendications 1 à 15, **caractérisé en ce que** chacun des volets (9) est associé à une portion (3, 4) périphérique de la structure (1, 3, 4, 5) la plus éloignée de l'axe principal (2), et est disposé pour exercer une force au moins sensiblement tangentielle.

17. Aérostat selon l'une des revendications 1 à 16, **caractérisé en ce que** la structure (1, 3, 4, 5) comprend un ballon torique (3) périphérique étanche aux gaz et surpressurisé par un gaz plus léger que l'air à une pression supérieure à celle de la chambre principale (16), **en ce qu'**il comprend autant de propulseurs (8) que de volets (9), et **en ce qu'**il comprend des pièces de support (4) fixées à ce ballon torique (3), régulièrement réparties autour de l'axe principal (2), chaque pièce de support (4) portant au moins un propulseur (8) et/ou au moins un volet mobile (9).

18. Aérostat selon l'une des revendications 1 à 17, **caractérisé en ce que** la structure (1, 3, 4, 5) comprend :

- un noyau central (1) globalement cylindrique rigide creux apte à renfermer les équipements électroniques et/ou informatiques et/ou de télécommunications et/ou de stockage d'énergie et/ou des équipements d'une mission embarquée,
- un ballon torique (3) périphérique surpressurisé,
- des pièces de support (4) fixées au ballon torique (3) périphérique et portant le(s) propulseur(s) (8) et le(s) volet(s) mobile(s) (9),
- des moyens de liaison (5) reliant le noyau central (1) et les pièces de support (4),

et **en ce qu'**une enveloppe externe (15) entoure et/ou complète le volume délimité par le ballon torique (3) périphérique et le noyau central (1) pour circonscrire au moins une chambre principale (16) étanche pressurisée.

**19.** Aérostat selon l'une des revendications 1 à 18, **caractérisé en ce que** chaque volet mobile (9) s'étend au moins sensiblement radialement et est mobile parallèlement à l'axe principal (2) entre une position escamotée dans un compartiment (11) de volet où il n'interfère pas avec le courant d'air relatif résultant des déplacements de l'aérostat par rapport à la masse d'air dans laquelle il est placé, et une position déployée où il interfère avec le courant d'air et tend à freiner la rotation de l'aérostat autour de l'axe principal (2).

**20.** Aérostat selon l'une des revendications 1 à 19, **caractérisé en ce que** le gaz est formé d'hélium, et **en ce que** le volume de la chambre principale (16) est adapté pour permettre le vol stratosphérique de l'aérostat.

**21.** Aérostat selon l'une des revendications 1 à 20, **caractérisé en ce qu'**il présente un rayon hors tout compris entre 5m et 50m - notamment de l'ordre de 15m-, et une hauteur axiale hors tout comprise entre 1m et 20m -notamment de l'ordre de 10m-

## Patentansprüche

**1.** Freiluftballon, der Folgendes umfasst:

- eine Versteifungsstruktur (1, 3, 4, 5), die eine symmetrische Form in Bezug auf eine Hauptachse (2) definiert,
- wenigstens eine einteilige, dicht verschlossene Hauptkammer (16) der genannten Struktur, die unter einem Druck eines Gases steht, das leichter ist als Luft, so dass der Luftballon fliegen kann,
- Mittel (8, 9) zum Antreiben des Luftballons, die Folgendes umfassen:

  . ein oder mehrere gleichmäßig um die Hauptachse (2) herum verteilte, durch Emission von von der genannten Struktur getragenen Partikel wirkende Vortriebsmittel (8), die so gestaltet sind, dass sie den Luftballon in einer Richtung um die Hauptachse (2) herum antreiben können und wenigstens einmal bei jeder Umdrehung des Luftballons um seine Hauptachse (2) von einem aktiven Zustand in einen inaktiven Zustand und umgekehrt gesteuert werden können,
  . eine oder mehrere von der genannten Struktur außerhalb der Hauptkammer (16) getragene bewegliche Flügelklappen (9), die regelmäßig um die Hauptachse (2) verteilt und so gestaltet sind, dass sie wenigstens einmal bei jeder Umdrehung des Luftballons um die Hauptachse (2) von einem aktiven Zustand, in dem sie die Rotation des Luftballons unter Ausübung einer aerodynamischen Schubkraft bremsen, die dazu neigt, den Luftballon in Translation lotrecht zur Hauptachse (2) zu verschieben, in einen inaktiven Zustand, in dem sie keinen erheblichen Widerstand gegen die Rotation des Luftballons leisten, und umgekehrt gesteuert werden können,
  . an Bord befindliche Steuermittel (19) zum Steuern der Vortriebsmittel (8) und der Flügelklappen (9), um:

- den Luftballon in eine permanente Rotation um die Hauptachse (2) zu bringen,
- den Luftballon translational mit wenigstens einer Komponente lotrecht zur Hauptachse (2) in Bezug auf die Luftmasse zu bringen, in der er sich bewegt.

**2.** Luftballon nach Anspruch 1, **dadurch gekennzeichnet, dass** er eine axiale Außenabmessung vollkommen parallel zur Hauptachse (2) hat, die geringer ist als seine radiale Außenabmessung vollkommen lotrecht zur Hauptachse (2).

**3.** Luftballon nach Anspruch 2, **dadurch gekennzeichnet, dass** er eine Außenform aufweist, die allgemein global umdrehungssymmetrisch um die Hauptachse (2) ist, insbesondere global lentikulär.

4. Luftballon nach einem der Ansprüche 1 bis 3, **dadurch gekennzeichnet, dass** er wenigstens ein Vortriebsmittel (8) hat, das ein ionisches Stellglied ist.

5. Luftballon nach einem der Ansprüche 1 bis 4, **dadurch gekennzeichnet, dass** er wenigstens ein Vortriebsmittel (8) umfasst, das ein Luftpulsationsmittel ist.

6. Luftballon nach einem der Ansprüche 1 bis 5, **dadurch gekennzeichnet, dass** er wenigstens eine elastische Außenhülle (15) umfasst, die wenigstens eine gasundurchlässige Hauptkammer (16) begrenzt, die mit einem Gas unter Druck gesetzt wird, das leichter ist als Luft, und dadurch, dass jede der beweglichen Flügelklappen (9) auf der Außenseite dieser Außenhülle (15) angeordnet ist.

7. Luftballon nach Anspruch 6, **dadurch gekennzeichnet, dass** jedes Vortriebsmittel (8) an der Struktur (1, 3, 4, 5) im Inneren der Hülle (15) befestigt ist und eine Partikelstrahldüse (10) aufweist, die die Hülle (15) auf undurchlässige Weise durchquert.

8. Luftballon nach einem der Ansprüche 1 bis 7, **dadurch gekennzeichnet, dass** er eine an Bord befindliche Energiequelle (21, 18) umfasst, die so gestaltet ist, dass sie die Versorgung von wenigstens jedem Vortriebsmittel (8) mit Energie gewährleistet.

9. Luftballon nach Anspruch 8, **dadurch gekennzeichnet, dass** die Energiequelle (21, 18) Folgendes umfasst:

- fotovoltaische Solarzellen (21), die auf wenigstens einem Abschnitt der Außenfläche (17) des Luftballons angeordnet sind,
- Mittel (18) zum Speichern von elektrischer Energie.

10. Luftballon nach einem der Ansprüche 1 bis 9, **dadurch gekennzeichnet, dass** die an Bord befindlichen Steuermittel (19) so gestaltet sind, dass in einem ersten Winkelsektor (28), der auf einer Seite einer radialen Richtung (Da) lotrecht zur Hauptachse (2) verläuft und in Bezug auf den relativen Wind fest ist, jedes Vortriebsmittel (8) im aktiven Zustand und jede Flügelklappe (9) im inaktiven Zustand ist, während in einem zweiten Winkelsektor (29), der auf der anderen Seite dieser radialen Richtung (Da) verläuft, jedes Vortriebsmittel (8) im inaktiven Zustand und jede Flügelklappe (9) im aktiven Zustand ist, so dass der Luftballon translational in Bezug auf den relativen Wind wenigstens im Wesentlichen in dieser radialen Richtung (Da) angetrieben wird.

11. Luftballon nach einem der Ansprüche 1 bis 10, **dadurch gekennzeichnet, dass** die Antriebsmittel (8, 9) so gestaltet sind, dass sie den Luftballon mit einer Geschwindigkeit $\omega$ zwischen 1 rd/s und 100 rd/s in Drehung versetzen können.

12. Luftballon nach Anspruch 11, **dadurch gekennzeichnet, dass** die Geschwindigkeit $\omega$ in der Größenordnung von 2n rd/s liegt.

13. Luftballon nach einem der Ansprüche 1 bis 12, **dadurch gekennzeichnet, dass** jedes Vortriebsmittel (8) und jede Flügelklappe (9) so gestaltet ist, dass sie innerhalb eines Zeitraums von weniger als $2\pi/4\omega$ vom inaktiven Zustand in den aktiven Zustand und vom aktiven Zustand in den inaktiven Zustand gesteuert werden können, wobei $\omega$ die Rotationsgeschwindigkeit des Luftballons ausgedrückt in Radianten pro Sekunde ist.

14. Luftballon nach einem der Ansprüche 1 bis 13, **dadurch gekennzeichnet, dass** er Mittel zum Halten der Position der Hauptachse (2) in Bezug auf eine in Bezug auf den Erdboden feste Referenzposition sowie Mittel zum Halten der Winkelposition der Struktur (1, 3, 4, 5) in Bezug auf die Hauptachse (2) in Bezug auf diese feste Referenz umfasst, und dadurch, dass die genannten Steuermittel (19) Rechenmittel umfassen, deren Aufgabe es ist, die Steuersignale zum Anlegen an jedes Vortriebsmittel (8) und an jede Flügelkappe (9) in Abhängigkeit von von diesen Haltemitteln erzeugten Signalen und anhand eines vorbestimmten Einstellsignals für die horizontale Position und/oder die horizontale Flugbahn der Hauptachse (2) in Bezug auf die feste Referenz zu bestimmen.

15. Luftballon nach einem der Ansprüche 1 bis 14, **dadurch gekennzeichnet, dass** jedes der Vortriebsmittel (8) mit einem peripheren Abschnitt (3, 4) der Struktur (1, 3, 4, 5) assoziiert ist, der sich von der Hauptachse (2) am weitesten entfernt befindet und so angeordnet ist, dass er eine wenigstens im Wesentlichen tangentiale Antriebskraft ausübt.

**16.** Luftballon nach einem der Ansprüche 1 bis 15, **dadurch gekennzeichnet, dass** jede der Flügelklappen (9) mit einem peripheren Abschnitt (3, 4) der Struktur (1, 3, 4, 5) assoziiert ist, der sich von der Hauptachse (2) am weitesten entfernt befindet, und so angeordnet ist, dass er eine wenigstens im Wesentlichen tangentiale Antriebskraft ausübt.

**17.** Luftballon nach einem der Ansprüche 1 bis 16, **dadurch gekennzeichnet, dass** die Struktur (1, 3, 4, 5) einen torischen Umfangsballon (3) umfasst, der für Gase undurchlässig ist und von einem Gas, das leichter ist als Luft, auf einen Druck über dem der Hauptkammer (16) gesetzt wird, und dadurch, dass er so viele Vortriebsmittel (8) wie Flügelklappen (9) umfasst, und dadurch, dass er an diesem torischen Ballon (3) befestigte Tragteile (4) umfasst, die gleichmäßig um die Hauptachse (2) verteilt sind, wobei jedes Tragteil (4) wenigstens ein Vortriebsmittel (8) und/oder wenigstens eine bewegliche Flügelklappe (9) umfasst.

**18.** Luftballon nach einem der Ansprüche 1 bis 17, **dadurch gekennzeichnet, dass** die Struktur (1, 3, 4, 5) Folgendes umfasst:

- einen globalen, zylindrischen, starren, hohlen mittleren Kern (1), der die Elektronik- und/oder Datenverarbeitungs- und/oder Telekommunikations- und/oder Energiespeichergeräte und/oder die Geräte in Verbindung mit dem durchzuführenden Auftrag umschließt,
- einen unter Überdruck stehenden torischen Umfangsballon (3),
- Tragteile (4), die an dem torischen Umfangsballon (3) befestigt sind und das/die Vortriebsmittel (8) und die bewegliche(n) Flügelklappe(n) (9) tragen,
- Verbindungsmittel (5), die den mittleren Kern (1) mit den Tragteilen (4) verbinden,

und dadurch, dass eine Außenhülle (15) das durch den torischen Umfangsballon (3) und den mittleren Kern (1) begrenzte Volumen umgibt und/oder vervollständigt, um wenigstens eine unter Druck stehende undurchlässige Hauptkammer (16) zu umgrenzen.

**19.** Luftballon nach einem der Ansprüche 1 bis 18, **dadurch gekennzeichnet, dass** jede bewegliche Flügelklappe (9) wenigstens im Wesentlichen radial verläuft und parallel zur Hauptachse (2) zwischen einer in einem Fach (11) der Flügelklappe eingeklappten Position, wo sie den relativen Luftstrom aufgrund der Bewegungen des Luftballons in Bezug auf die Luftmasse, in der er sich befindet, nicht stört, und einer ausgeklappten Position beweglich ist, wo sie in den Luftstrom eingreift und dazu neigt, die Rotation des Luftballons um die Hauptachse (2) abzubremsen.

**20.** Luftballon nach einem der Ansprüche 1 bis 19, **dadurch gekennzeichnet, dass** das Gas aus Helium besteht, und dadurch, dass das Volumen der Hauptkammer (16) so gewählt ist, dass es einen Flug des Luftballons in der Stratosphäre gestattet.

**21.** Luftballon nach einem der Ansprüche 1 bis 20, **dadurch gekennzeichnet, dass** er einen Außenradius von 5m bis 50m, insbesondere von etwa 15m, und eine axiale Gesamthöhe von 1m bis 20m, insbesondere von etwa 10m hat.

**Claims**

**1.** A free aerostat, comprising:

- a strengthening structure (1, 3, 4, 5), which defines a shape which is symmetrical relative to a main axis (2);
- at least one main chamber (16) closed in a sealed manner, which is integral with the said structure, and is pressurised by a gas which is lighter than air, such as to permit flight of the aerostat;
- means (8, 9) for driving the aerostat comprising:
  - · one or a plurality of particle-emission propulsion units (8) supported by the said structure, which are regularly distributed around the main axis (2), and are designed to be able to drive the aerostat in rotation in one direction around the main axis (2), and to be able to be controlled from an active state to an inactive state and vice-versa, at least once for each rotation of the aerostat around the main axis (2);
  - · one or a plurality of mobile flaps (9), which are supported by the said structure outside the main chamber (16), are distributed regularly around the main axis (2), and are designed to be able to be controlled at least once for each rotation of the aerostat around the main axis (2), from an active state, in which they

brake the rotation of the aerostat, whilst exerting aerodynamic thrust which tends to displace the aerostat in translation perpendicularly relative to the main axis (2), to an inactive state, in which they do not offer any substantial resistance to the rotation of the aerostat, and vice versa; and

· on-board control means (19), which are designed to control the propulsion units (8) and the flaps (9) in order to

- drive the aerostat in continuous rotation around the main axis (2); and
- drive the aerostat in translation, with at least one component which is perpendicular to the main axis (2), relative to the volume of air in which it moves.

**2.** An aerostat as claimed in Claim 1, **characterized in that** it has an overall axial dimension parallel to the main axis (2) which is smaller than its overall radial dimension perpendicular to the main axis (2).

**3.** An aerostat as claimed in Claim 2, **characterized in that** it has a general outer shape which is globally symmetrical in revolution around the main axis (2), and in particular is globally lenticular.

**4.** An aerostat as claimed in any one of Claims 1 to 3, **characterized in that** it comprises at least one propulsion unit (8) which is an ionic actuator.

**5.** An aerostat as claimed in any one of Claims 1 to 4, **characterized in that** it comprises at least propulsion unit (8) which is an air pulsation unit.

**6.** An aerostat as claimed in any one of Claims 1 to 5, **characterized in that** it comprises at least one flexible outer envelope (15), which delimits at least one main chamber (16) which is sealed against gases and is pressurised by a gas lighter than air, and each of the mobile flaps (9) is disposed outside this outer envelope (15).

**7.** An aerostat as claimed in Claim 6, **characterized in that** each propulsion unit (8) is secured to the structure (1, 3, 4, 5) inside the envelope (15), and has a particle-ejection nozzle (10), which passes in a sealed manner through the envelope (15).

**8.** An aerostat as claimed in any one of Claims 1 to 7, **characterized in that** it comprises an on-board energy source (21, 18) which is designed to assure the energy supply at least of each propulsion unit (8).

**9.** An aerostat as claimed in Claim 8, **characterized in that** the energy source (21, 18) comprises:

- photovoltaic solar cells (21) which are disposed on at least one upper surface portion (17) of the aerostat; and
- means (18) for storage of electrical energy.

**10.** An aerostat as claimed in any one of Claims 1 to 9, **characterized in that** the on-board control means (19) are designed such that, in a first angular sector (28) which extends from one side in a radial direction (Da) perpendicular to the main axis (2), and is fixed in relation to the relative wind, each propulsion unit (8) is in the active state and each flap (9) is in the inactive state, whereas in a second angular sector (29) which extends from the other side of this radial direction (Da), each propulsion unit (8) is in the inactive state, and each flap (9) is in the active state, such that the aerostat is driven in translation in relation to the relative wind, at least substantially according to this radial direction (Da).

**11.** An aerostat as claimed in any one of Claims 1 to 10, **characterized in that** the drive means (8, 9) are designed to be able to drive the aerostat in rotation at a speed $\omega$ of between 1rd/s and 100rd/s.

**12.** An aerostat as claimed in Claim 11, **characterized in that** the speed $\omega$ is approximately 2nrd/s.

**13.** An aerostat as claimed in any one of Claims 1 to 12, **characterized in that** each propulsion unit (8) and each flap (9) is designed to be able to be controlled from the inactive state to the active state, and from the active state to the inactive state in a period of less than $2\pi/4\omega$, $\omega$ being the speed of rotation of the aerostat expressed in radians per second.

**14.** An aerostat as claimed in any one of Claims 1 to 13, **characterized in that** it comprises means for location of the position of the main axis (2) relative to a reference point which is fixed in relation to the ground, and means for

location relative to this fixed reference point for the angular position of the structure (1, 3, 4, 5) relative to the main axis (2), and that the said control means (19) comprise calculation means which are designed to determine the control signals to be applied to each propulsion unit (8) and to each flap (9), according to signals issued by these location means, and in accordance with a predetermined instruction signal for the horizontal position and/or the horizontal path of the main axis (2), relative to the fixed reference point.

**15.** An aerostat as claimed in any one of Claims 1 to 14, **characterized in that** each of the propulsion units (8) is associated with a peripheral portion (3, 4) of the structure (1, 3, 4, 5) which is furthest away from the main axis (2), and is disposed such as to exert a drive force which is at least substantially tangential.

**16.** An aerostat as claimed in any one of Claims 1 to 15, **characterized in that** each of the flaps (9) is associated with a peripheral portion (3, 4) of the structure (1, 3, 4, 5) which is furthest away from the main axis (2), and is disposed such as to exert a force which is at least substantially tangential.

**17.** An aerostat as claimed in any one of Claims 1 to 16, **characterized in that** the structure (1, 3, 4, 5) comprises a peripheral toric balloon (3), which is sealed against gases and is over-pressured by a gas lighter than air, to a pressure greater than that of the main chamber (16), it comprises the same number of propulsion units (8) as flaps (9), and it comprises support parts (4) which are secured to this toric balloon (3), and are regularly distributed around the main axis (2), each support part (4) supporting at least one propulsion unit (8) and/or at least one mobile flap (9).

**18.** An aerostat as claimed in any one of Claims 1 to 17, **characterized in that** the structure (1, 3, 4, 5) comprises:

- a rigid, globally cylindrical hollow central core (1), which can enclose the electronic and/or computer and/or telecommunications and/or energy storage equipment, and/or equipment of an on-board mission;
- an over-pressurised peripheral toric balloon (3);
- support parts (4) which are secured to the peripheral toric balloon (3), and support the propulsion unit(s) (8) and the mobile flap(s) (9);
- connection means (5), which connect the central core (1) and the support parts (4); and
- an outer envelope (15), which surrounds and/or completes the volume delimited by the peripheral toric balloon (3) and the central core (1), in order to circumscribe at least one pressurised, sealed main chamber (16).

**19.** An aerostat as claimed in any one of Claims 1 to 18, **characterized in that** each mobile flap (9) extends at least substantially radially, and is mobile parallel to the main axis (2), between a position retracted in a flap compartment (11), in which it does not interfere with the relative current of air obtained from displacements of the aerostat relative to the volume of air in which it is placed, and a deployed position, in which it interferes with the current of air, and tends to brake the rotation of the aerostat around the main axis (2).

**20.** An aerostat as claimed in any one of Claims 1 to 19, **characterized in that** the gas consists of helium, and that the volume of the main chamber (16) is designed to permit stratospheric flight of the aerostat.

**21.** An aerostat as claimed in any one of Claims 1 to 20, **characterized in that** it has an overall radius of between 5 m and 50 m, in particular of approximately 15 m, and an overall axial height of between 1 m and 20 m, and in particular approximately 10 m.

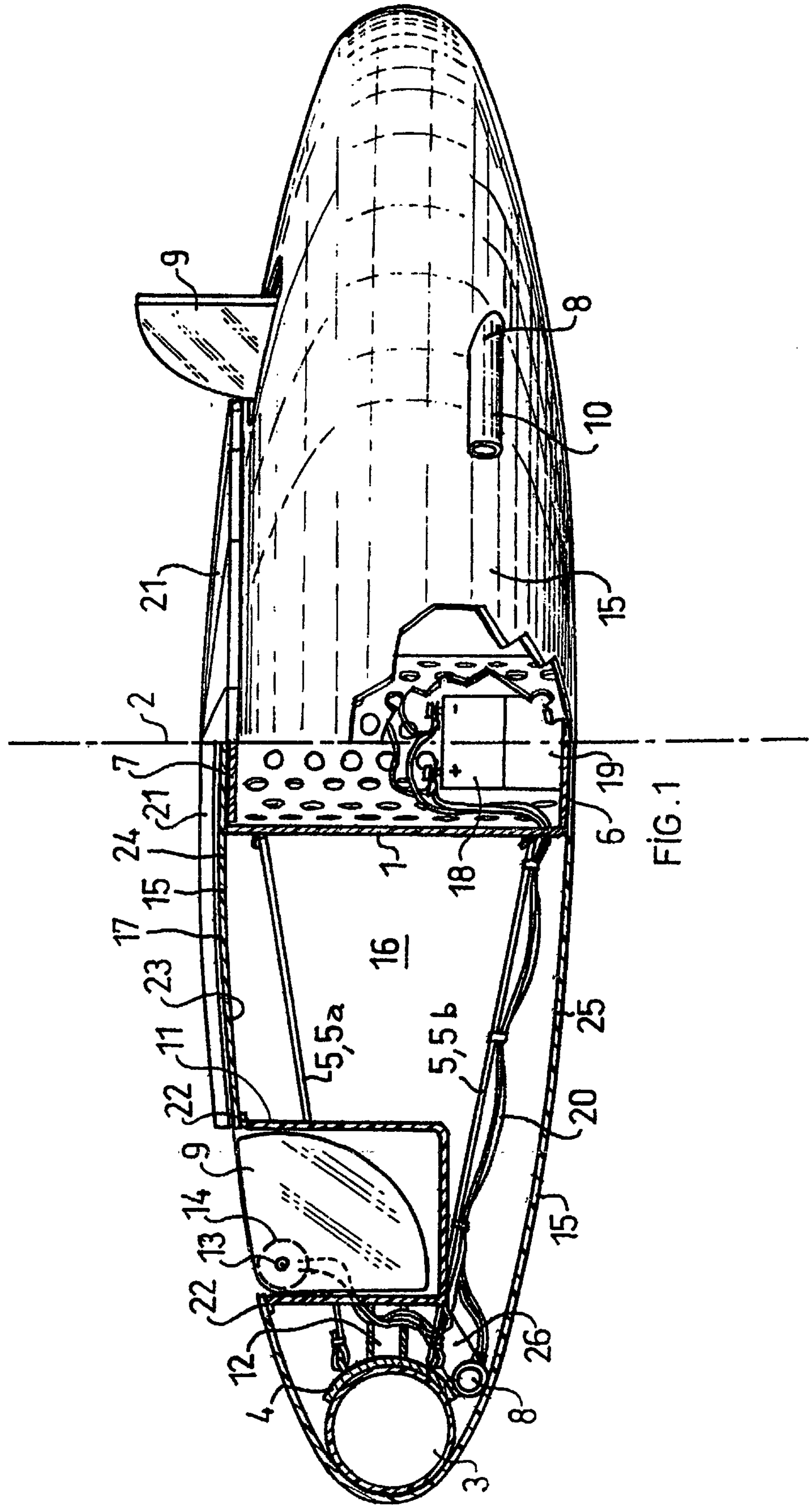
9
8
10
21
15
2
7
21
24
15
17
23
11
22
9
14
13
22
12
4
3
8
26
15
20
5,5b
25
5,5a
16
1
18
6
19

FIG. 1

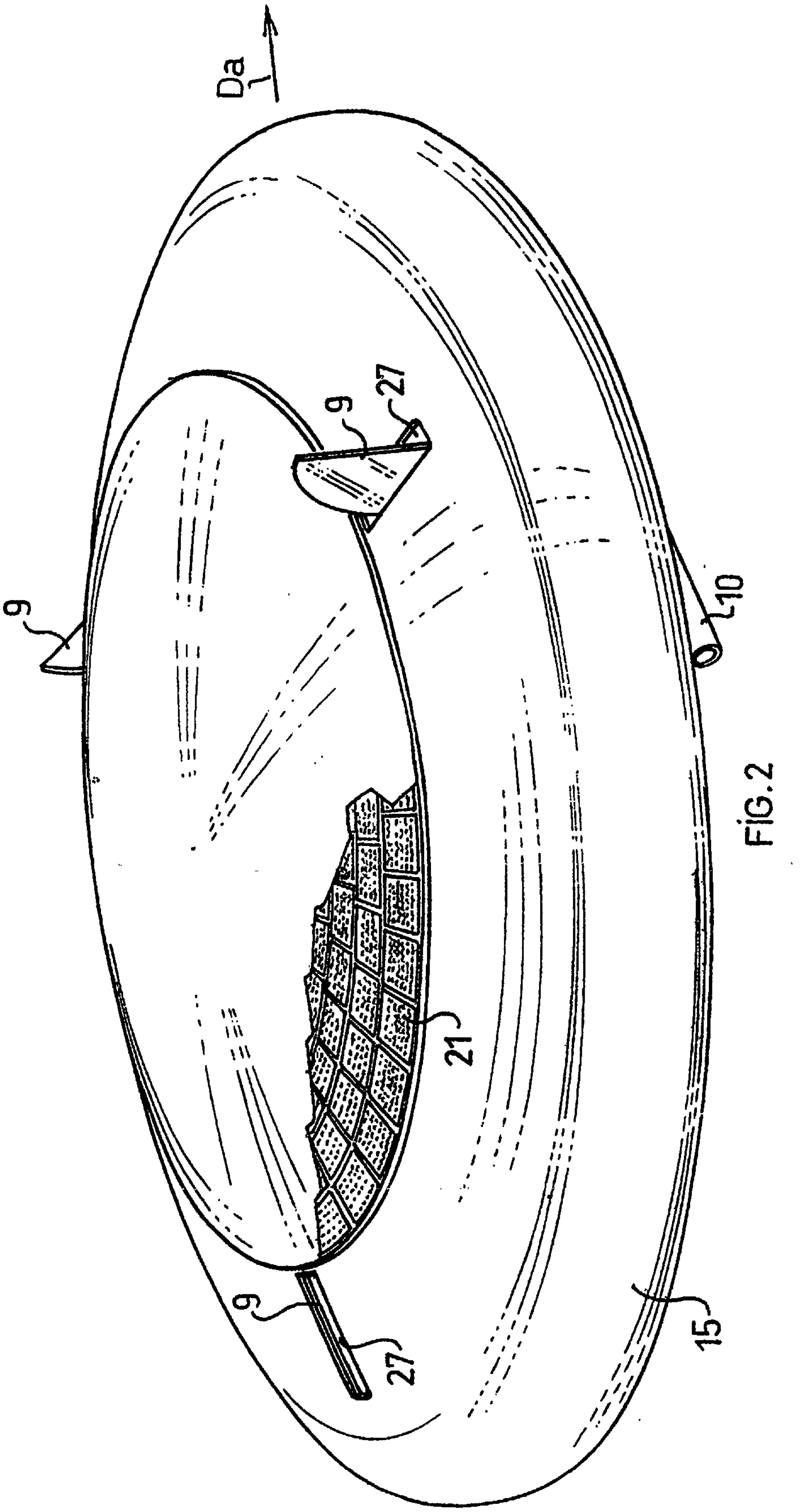


FIG.2

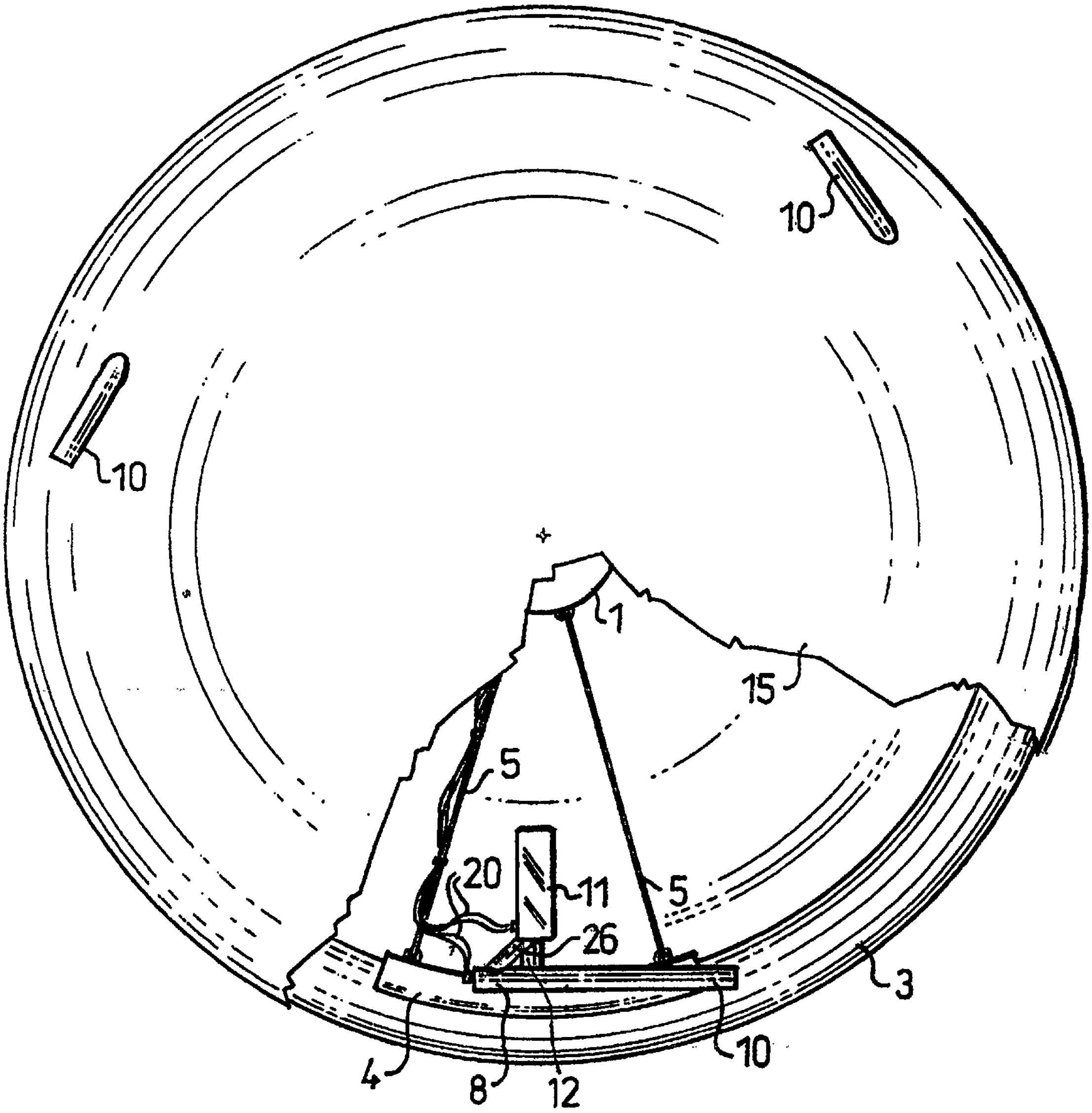
10
10
1
15
5
20
11
5
26
3
10
4
8
12

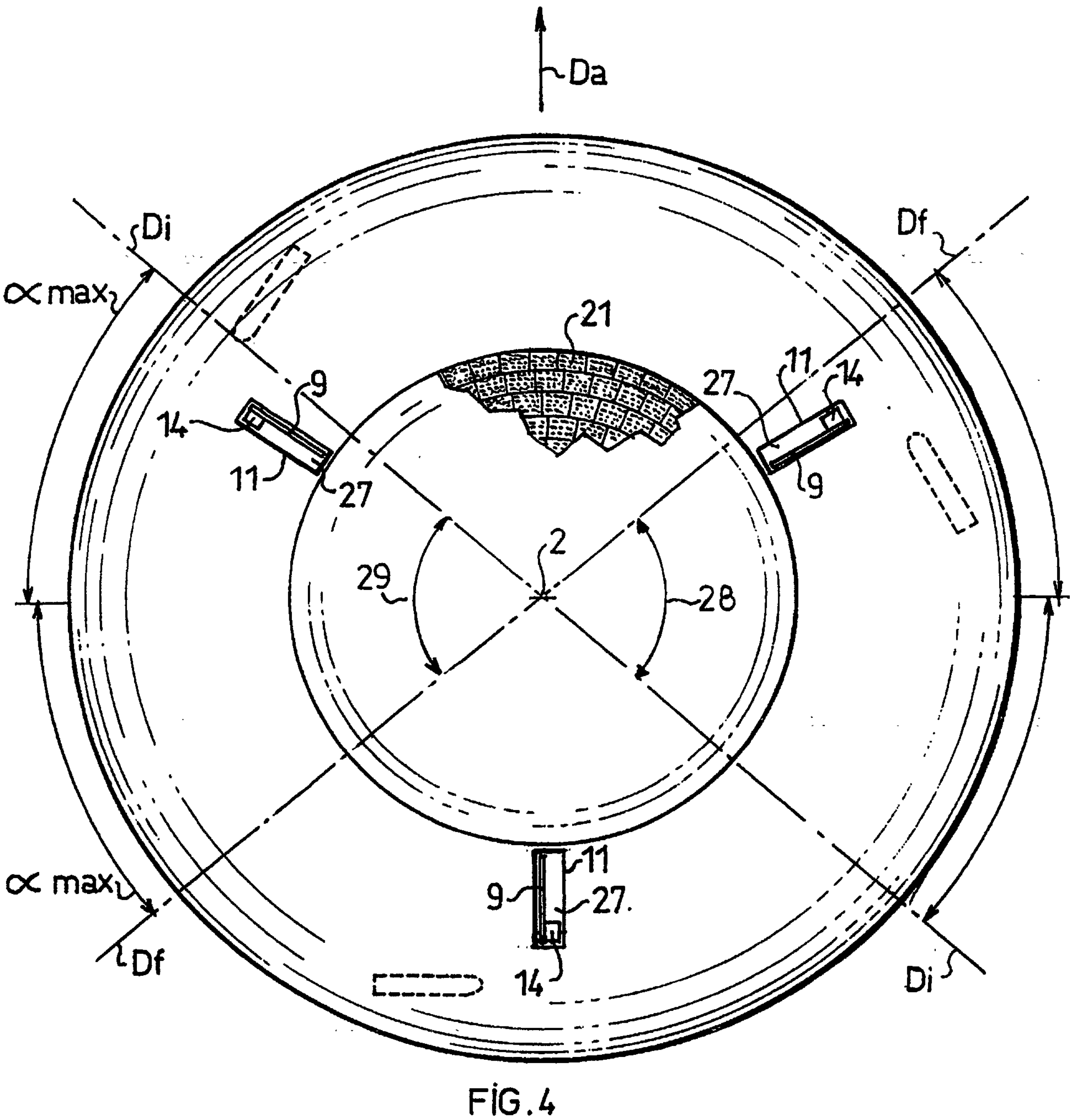


FIG.4

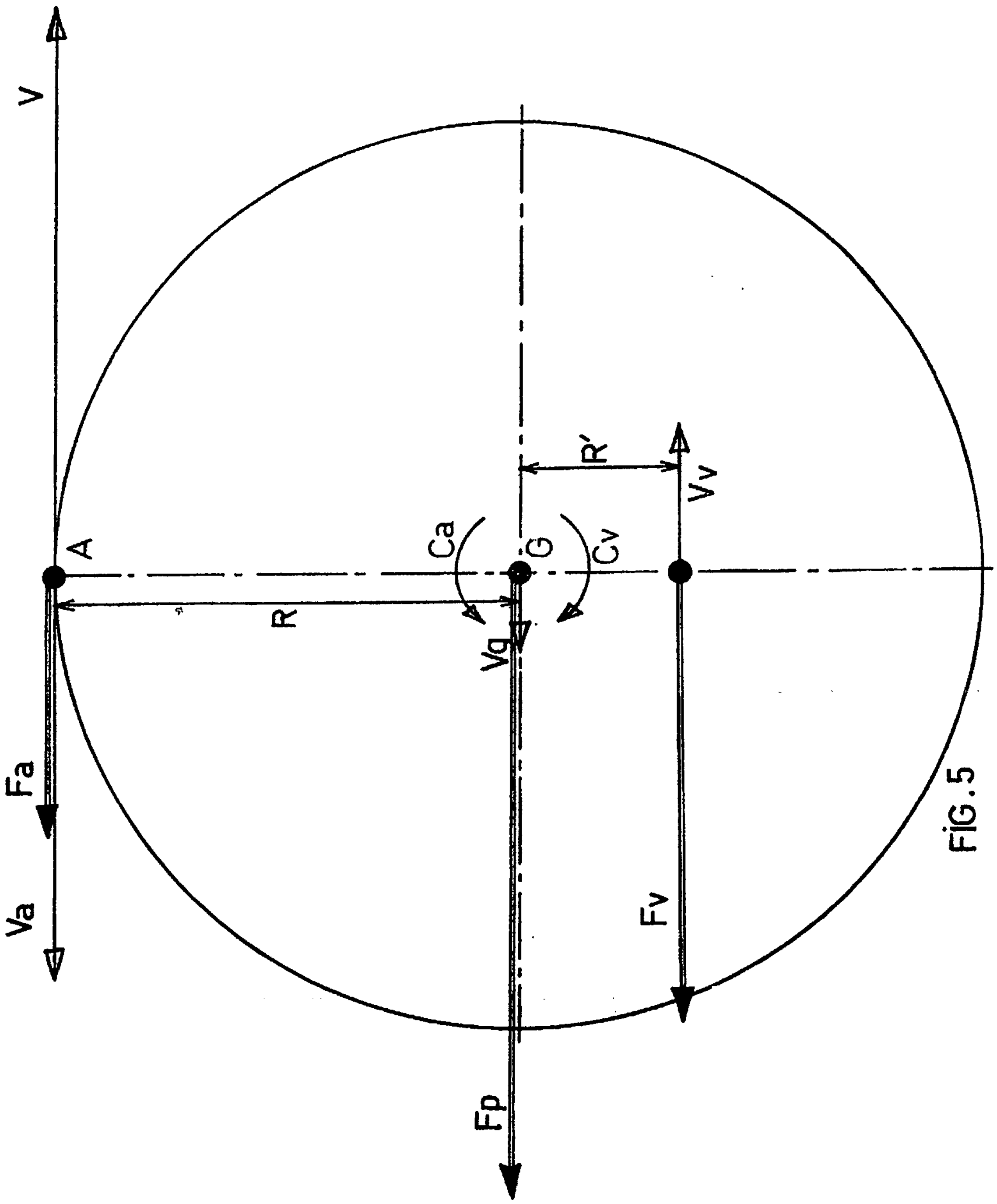


FIG. 5